# EUROPEAN PATENT SPECIFICATION

(11) **EP 2 960 222 B1**
(45) Date of publication and mention of the grant of the patent: **04.11.2020**
(21) Application number: 15173777.2
(22) Date of filing: 25.06.2015
(51) Int. Cl.: C04B 38/00, C04B 41/45

(54) **METHOD AND APPARATUS FOR MANUFACTURING PRE-COATED HONEYCOMB SEGMENTS FOR TURBOMACHINES**
VERFAHREN UND VORRICHTUNG ZUR HERSTELLUNG VON VORBESCHICHTETEN WABENSEGMENTEN FÜR TURBOMASCHINEN
PROCÉDÉ ET APPAREIL DE FABRICATION DE SEGMENTS EN NID D'ABEILLES PRÉREVÊTUS POUR TURBOMACHINES

(30) Priority: 27.06.2014 US 201414317654
(43) Date of publication of application: 30.12.2015
(73) Proprietor: General Electric Company, Schenectady, NY 12345 (US)
(72) Inventor: LIN, Dechao, Greenville, SC South Carolina 29615 (US); BUCCI, David Vincent, Greenville, SC South Carolina 29615 (US)
(74) Representative: BRP Renaud & Partner mbB Rechtsanwälte Patentanwälte Steuerberater

(56) References cited:
- EP-A1- 2 105 427
- WO-A1-93/23154
- WO-A2-2011/008461
- DE-A1- 3 621 114

## Description

### BACKGROUND OF THE INVENTION

The subject matter disclosed herein relates to the art of turbomachines and, more particularly to a method and apparatus for manufacturing pre-coated honeycomb segments for a turbomachine.

Turbomachines typically include a compressor portion and a turbine portion. The compressor portion forms a compressed air stream that is introduced into the turbine portion. In a gas turbomachine, a portion of the compressed airstream mixes with products of combustion forming a hot gas stream that is introduced into the turbine portion through a transition piece. The hot gas stream expands through the turbine portion along a hot gas path. The turbine portion converts thermal energy from the products of combustion into mechanical/rotational energy that is used to drive a component. The component could be a generator, a pump, an aircraft, a locomotive, or the like.

Many portions/components of turbomachines experience high temperature conditions. In many cases, those portions are provided with honeycomb segments that are designed to dissipate heat and provide a seal that may prevent gas leakage. Oftentimes, the honeycomb segment includes curvilinear surfaces configured to mate with corresponding surfaces on the turbomachine. The honeycomb segment is usually formed from individual honeycomb pieces that are joined to form a desired segment. Typically the segment, and the component to which the segment is joined, is formed from an uncoated heat resistant material.

EP 2 105 427 A1 discloses a honeycomb-structured body and a method for manufacturing such a body, whereby the honeycomb is intended as a catalyst for high temperature gases discharged from an internal combustion engine.

### BRIEF DESCRIPTION OF THE INVENTION

According to a first aspect of the invention, a method of manufacturing a pre-coated honeycomb segment for turbomachines according to claim 1 is provided. This method comprises: (a) forming a honeycomb segment having a first surface and a second, opposing surface; (b) providing a coating material on the honeycomb segment, the coating material not extending to the first surface and the second, opposing surface; (c) positioning the first surface at a first fixture; and (d) forming a coating to the honeycomb segment. The method further comprises: (i) providing a first intermediate member between the first surface and the first fixture; and (ii) providing a second intermediate member on the second, opposing surface and a second fixture and positioning the second fixture on the second intermediate member; or (iii) positioning at least one second fixture on the second, opposing surface. The first and second intermediate members are to enhance the separation of the honeycomb segment from the first fixture and the second fixture following the forming of the coating.

According to second aspect of the invention, an apparatus for pre-coating a honeycomb segment for turbomachines according to claim 12 is provided. This apparatus comprises (a) a first fixture having a first surface section; (b) a honeycomb segment having a first surface and a second, opposing surface, the first surface being arranged at the first surface section; (c) a second fixture including a second surface section arranged at the second, opposing surface of the honeycomb segment, the first and second fixtures being secured to the honeycomb segment; (d) an intermediate member arranged between the first surface section and the first surface of the honeycomb segment; and (e) another intermediate member arranged between the second surface section and the second, opposing surface of the honeycomb segment.

These and other advantages and features will become more apparent from the following description taken in conjunction with the drawings.

### BRIEF DESCRIPTION OF DRAWINGS

The subject matter, which is regarded as the invention, is particularly pointed out and distinctly claimed in the claims at the conclusion of the specification. The foregoing and other features, and advantages of the invention are apparent from the following detailed description taken in conjunction with the accompanying drawings in which:
FIG. 1 is a schematic view of an apparatus for pre-coating a honeycomb segment in accordance with an aspect of an exemplary embodiment;
FIG. 2 illustrates an uncoated honeycomb segment prior to coating, in accordance with an exemplary embodiment;
FIG. 3 illustrates the first fixture and first intermediate member of the apparatus of FIG. 1, in accordance with an exemplary embodiment;
FIG. 4 illustrates the uncoated honeycomb segment of FIG. 2 undergoing a slurry application.
FIG. 5 illustrates honeycomb segment undergoing a drying process following slurry application;
FIG. 6 illustrates the honeycomb segment of FIG. 5 following removal of the coating material from first and second opposing surfaces resting upon first fixture and first intermediate member of FIG. 3;
FIG. 7 illustrates another intermediate member arranged on the honeycomb segment of FIG. 6; and
FIG. 8 depicts an apparatus for pre-coating a honeycomb segment, in accordance with another aspect of an exemplary embodiment;
FIG. 9 depicts an exploded view of a portion of an apparatus for vapor coating a honeycomb segment, in accordance with yet another exemplary embodiment; and
FIG. 10 depicts a honeycomb segment exposed to a vapor coating on the apparatus of FIG. 9.

The detailed description explains embodiments of the invention, together with advantages and features, by way of example with reference to the drawings.

### DETAILED DESCRIPTION OF THE INVENTION

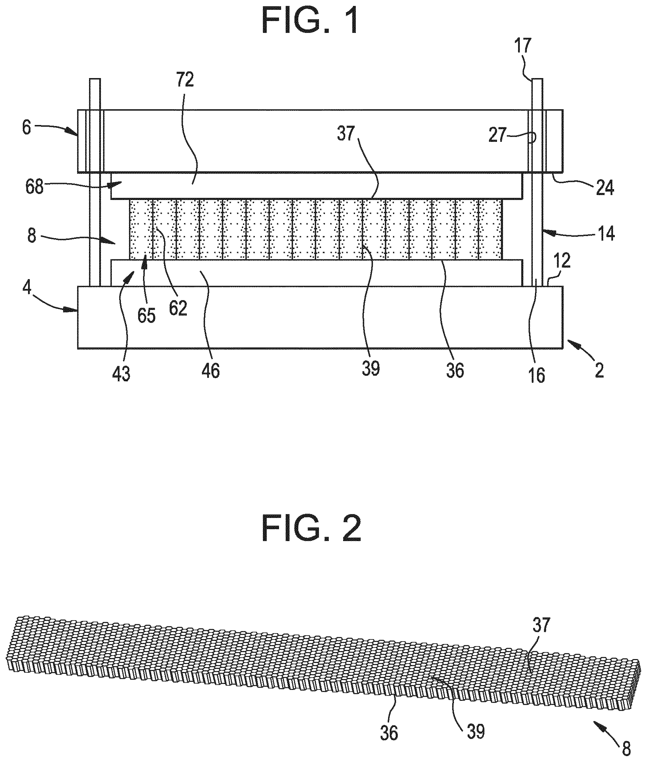

An apparatus for pre-coating honeycomb segments, in accordance with an exemplary embodiment, is indicated generally at 2, in FIG. 1. Apparatus 2 includes a first fixture 4 and a second fixture 6 that receive a honeycomb segment 8. First fixture 4 includes a first surface section 12 from which may project a plurality of guide members, one of which is indicated at 14. Guide member 14 extends from a first end 16 coupled to first fixture 4 to a second, cantilevered end 17. Second fixture 6 includes a second surface section 24 having a plurality of openings, one of which is shown at 27. Openings 27 may receive respective ones of guide members 14 in order to establish a desired alignment of second fixture 6 and first fixture 4. Of course, it should be understood that first and second fixtures may be arranged relative to one another without using guide members. It should also be understood that first and second fixtures may include additional openings that expose honeycomb segment 8 to environmental conditions during processing.

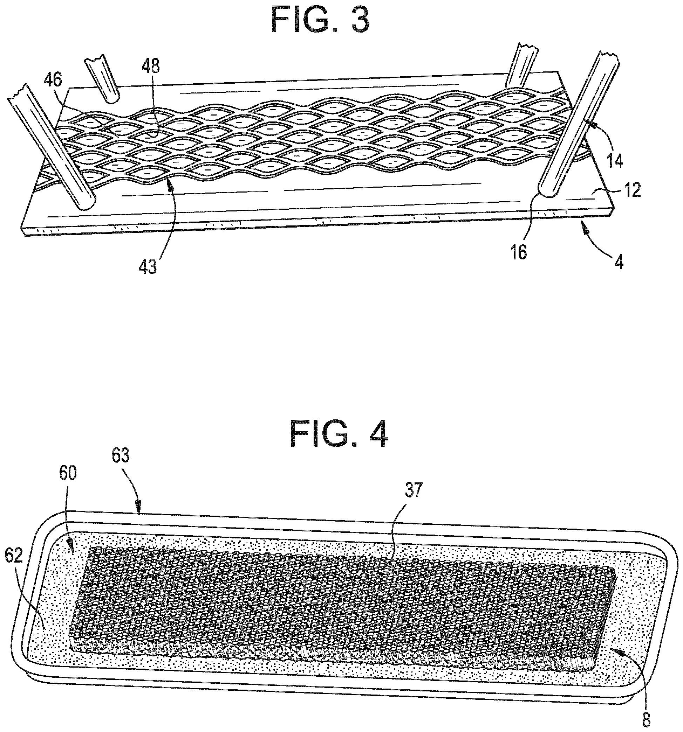

As shown in FIG. 2, honeycomb segment 8 includes a first surface 36 and a second, opposing surface 37. A plurality of voids or cells 39 extend between first and second surfaces providing a honeycomb appearance. Honeycomb segment 8 is positioned relative to apparatus 2 with first surface 36 being arranged at first surface section 12 of first fixture 4 (FIG. 1). In accordance with an aspect of an exemplary embodiment, a first intermediate member 43 is arranged on first surface section 12 of first fixture 4 and first surface 36 of honeycomb segment 8. Intermediate member 43 enhances separation of honeycomb segment 8 from first fixture 4 following processing. As shown in FIG. 3, intermediate member 43 takes the form of an expanded plate 46 including a plurality of openings 48. In this manner, expanded plate 46 includes a minimal surface area. As such, intermediate member 43 may take on a variety of forms including steel screens and the like. Intermediate member 43 may also take the form of thin refractory sheets, aluminum tapes, stop-off tapes and the like that also may facilitate separation of honeycomb segment 8 from first fixture 4.

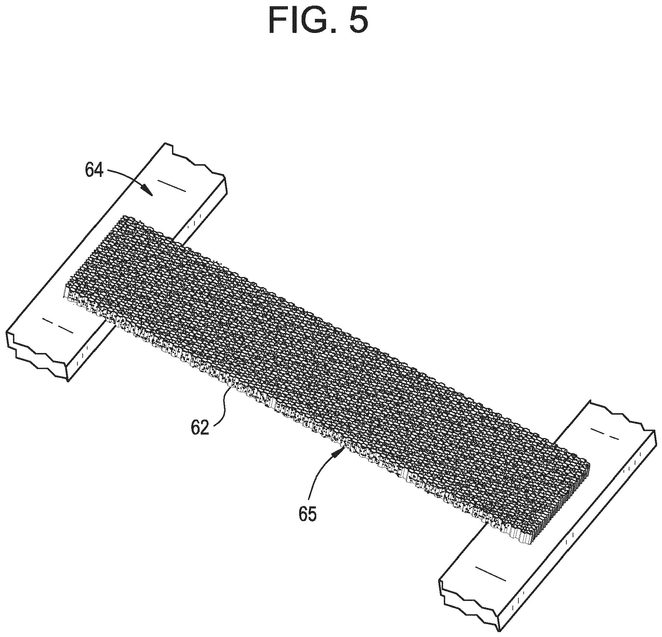

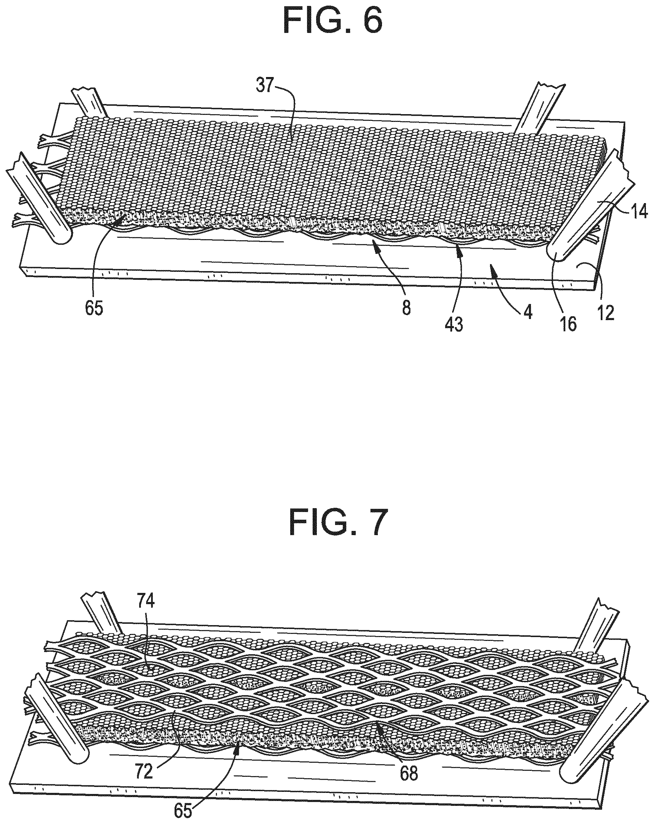

Prior to being arranged at first fixture 4, honeycomb segment 8 is provided with a coating material 60, as shown in FIG. 4. Coating material 60 may be applied through immersion in a gel or a slurry 62 or in a gel tank 63. The term "gel" or "slurry" describes a coating material that may include a liquid binder portion and a solid metal powder portion. After coating material is applied, honeycomb segment 8 is positioned on a drying apparatus 64 as shown in FIG. 5, to cure slurry 62. Following drying, coating material 60 is removed from first and second surfaces 36 and 37 and honeycomb segment 8 is positioned on first intermediate member 43, as shown in FIG. 6. Second intermediate member 68 is positioned on second surface 37, as shown in FIG. 7. Honeycomb segment 8, covered with coating material 60 and arranged on apparatus 2, is exposed to a heating process in a furnace. After heating, coating material 60 forms a coating 65 on all exposed surfaces of honeycomb segment 8. Coating 65 enhances oxidation resistance of honeycomb segment 8 when exposed to elevated temperatures in a turbomachine. When processed, coating 65 also increases an overall brittleness of honeycomb segment 8. It may be desirable to facilitate separation of honeycomb segment 8 and first fixture 4 with intermediate member 43.

Prior to heating, and before arranging honeycomb segment 8 on fixture 4, coating material 60 may be removed from first and second surfaces 36 and 37. Removing coating material 60 from first and second surfaces 36 and 37 of honeycomb segment 8 further enhances separation of honeycomb segment 8 from apparatus 2. The removal of coating material 60 from first and second surfaces 36 and 37 also facilitates joining honeycomb segment 8 to a component by, for example, brazing. After coating material 60 is removed, first surface 36 is positioned on first intermediate member 43, and a second intermediate member 68 may be positioned at second surface 37, as shown in FIG. 7.

In a manner similar to that described above, second intermediate member 68 is shown as an expanded plate 72 including a plurality of openings 74. However, as noted above, second intermediate member 68 may take on a variety of forms. At this point, second fixture 6 is arranged at second intermediate member 68, and apparatus 2 is processed to bond coating material 60 to honeycomb segment 8 forming coating 65 to having a desired thickness. The particular thickness of coating 65 may vary from application to application. Processing may include baking apparatus 2 or otherwise exposing coating material 60 to environmental conditions that facilitate bonding or coating generation with honeycomb segment 8.

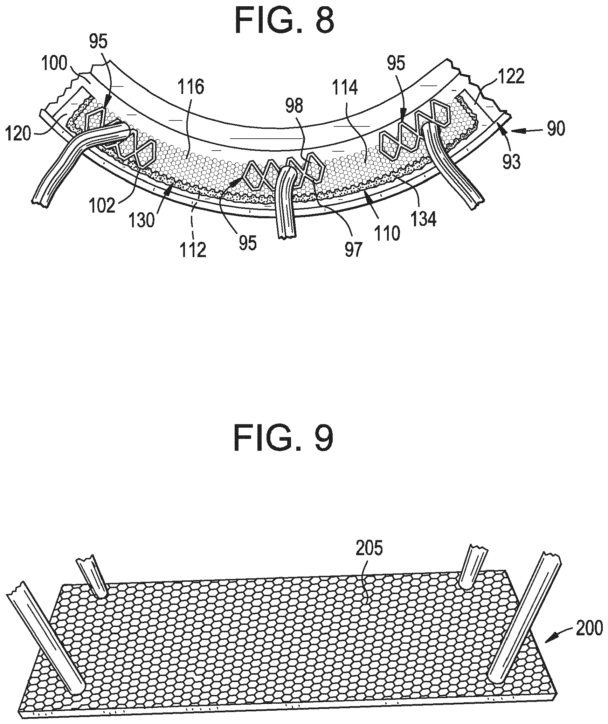

FIG. 8 depicts an apparatus for pre-coating honeycomb segments 90 having curvature requirement, in accordance with another aspect of an exemplary embodiment. Apparatus 90 includes a first fixture 93 and a plurality of second fixtures 95. As shown, second fixtures 95 take the form of expanded plates 97 each including a plurality of openings 98. Second fixtures 95 may also be a single component similar to first fixture 93. First fixture 93 includes a curvilinear first surface section 100 and second fixture 95 includes a second surface section 102. A flat or a curvilinear honeycomb segment 110 is arranged at apparatus 90. Honeycomb segment 110 includes a first surface 112 and an opposing second surface 114. A plurality of voids 116 extends through first and second surfaces 112 and 114 creating a honeycomb appearance. First surface 112 is arranged at first surface section 100. In the exemplary embodiment shown, an intermediate member 120 is arranged between first surface 112 and first surface section 100. In the exemplary embodiment shown, intermediate member 120 is shown in the form of stop-off tape 122. However, it should be understood that intermediate member 120 may also take the form of thin refractory sheets, aluminum tapes, expanded plates and the like that may also facilitate separation of honeycomb segment 110 from first fixture 93.

In accordance with the exemplary embodiment shown, honeycomb segment 110 is provided with a coating material 130. Coating material 130 may be a cement 134 that may take the form of a pack powder. Coating material 130 may also take the form of a slurry or gel. Coating material 130 is provided on honeycomb segment 110 and may be introduced through openings 98 in expanded plate 97. Coating material 130 may be removed from second surface 114 prior to processing. After processing, honeycomb segment 110 may be removed from apparatus 90 and mounted in a turbomachine (not shown).

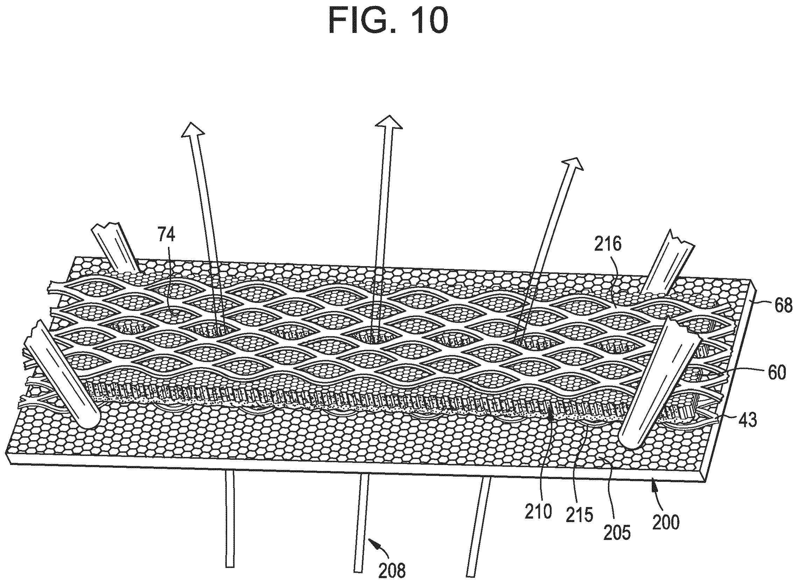

In accordance with yet another aspect of the exemplary embodiment as shown in FIG. 9, a fixture 200 may include a plurality of openings or vapor passages 205. As will be detailed below, vapor passages 205 allow a chemical coating vapor 208 to pass through fixture 200 and encompass a honeycomb segment 210, as shown in FIG. 10 9 . Honeycomb segment 210 may be in direct contact with fixture 200. Alternatively, first and second intermediate members 215 and 216 may be arranged on opposing surfaces (not separately labeled) of honeycomb segment 210. Further, another fixture, (also not shown) may be arranged on second intermediate member 216. In this manner, all exposed surfaces of honeycomb segment 210 may be coated.

At this point it should be appreciated that the exemplary embodiments describe an apparatus and method for coating honeycomb segments prior to installation in a turbomachine or mounting to a turbomachine component. That is, contrary to prior art method in which the honeycomb segment was mounted to a component prior to coating, the exemplary embodiments pre-coat the honeycomb segment. In this manner, the exemplary embodiments enhance manufacturing and reduce an overall complexity of component construction. In addition, it should be understood that the honeycomb segment may be exposed to coating material through a variety of processes. For example, a fixture supporting a honeycomb segment may be buried in a pack powder and exposed to heat to form a coating. Alternatively, powder may be introduced into each of the plurality of voids before mounting the honeycomb segment to a fixture and heating. Other methods of creating a bond between the honeycomb segment and a coating material prior to mounting to a component are also contemplated. Further, the exemplary embodiments provide an apparatus that provides minimal contact area with the honeycomb segment. In this manner, the honeycomb segment may be easily removed from the apparatus following processing. As the honeycomb segment is brittle following processing, reducing contact area advantageously reduces and/or eliminates fracturing, or cracking upon removal. While the invention has been described in detail in connection with only a limited number of embodiments, it should be readily understood that the invention is not limited to such disclosed embodiments. Rather, the invention can be modified to incorporate any number of variations, alterations, substitutions or equivalent arrangements not heretofore described, but which are commensurate with the scope of the invention as defined in the claims. Additionally, while various embodiments of the invention have been described, it is to be understood that aspects of the invention may include only some of the described embodiments. Accordingly, the invention is not to be seen as limited by the foregoing description, but is only limited by the scope of the appended claims.

## Claims

1. A method of manufacturing a pre-coated honeycomb segment (8) for turbomachines comprising:
forming a honeycomb segment (8) having a first surface (36) and a second, opposing surface (37);
providing a coating material (60) on the honeycomb segment (8), the coating material (60) not extending to the first surface (36) and the second, opposing surface (37);
positioning the first surface (36) at a first fixture (4); and
forming a coating (65) to the honeycomb segment (8),
**characterized in that** the method further comprising:
providing a first intermediate member (43) between the first surface (36) and the first fixture (4); and
providing a second intermediate member (68) on the second, opposing surface (37) and a second fixture (6) and positioning the second fixture (6) on the second intermediate member (68); or
positioning at least one second fixture (6) on the second, opposing surface (37) ;
wherein the first and the second intermediate members (43, 68) are selected to enhance the separation of the honeycomb segment (8) from the first fixture (4) and the second fixture (6) following the forming of the coating (65).

2. The method of claim 1, wherein providing the coating material (60) on the honeycomb segment (8) includes immersing the honeycomb segment (8) in a gel (62).

3. The method of claim 2, further comprising: removing the gel (62) from the first surface (36) and the second, opposing surface (37) after gel or slurry (62) has dried.

4. The method of claim 2, wherein immersing the honeycomb segment (8) in the gel (62) includes dipping the honeycomb segment (8) in a slurry (62).

5. The method of claim 1, wherein providing the coating material (60) on the honeycomb segment (8) includes covering the honeycomb segment (8) in a cement (130).

6. The method of claim 5, wherein covering the honeycomb segment (8) in the slurry (62) includes filling voids (39) in the honeycomb segment (8) with the cement (130).

7. The method of claim 5, wherein covering the honeycomb segment (8) with the cement (130) includes covering the honeycomb segment (8) on the first fixture (4) with a pack powder.

8. The method of any of claims 1-4, wherein providing the coating material (60) on the honeycomb segment (8) includes passing a chemical vapor through openings (27) in the first fixture (4).

9. The method of claim 1, wherein providing the intermediate member (43) includes positioning one of an expanded plate (46), an aluminum tape, and a stop-off tape (122) on the first fixture (4).

10. The method of claim 1, wherein positioning the at least one second fixture (6) on the second, opposing surface (37) includes positioning a plurality of second fixtures (6) on the second, opposing surface (37).

11. The method of claim 1, wherein the at least one second fixture (6) includes a plurality of openings (27).

12. An apparatus for pre-coating a honeycomb segment (8) for turbomachines to be used in the method of any of claims 1-11, the apparatus comprising :
a first fixture (4) having a first surface section (12);
a honeycomb segment (8) having a first surface (36) and a second, opposing surface (37), the first surface (36) being arranged at the first surface section (12);
a second fixture (6) including a second surface section (24) arranged at the second, opposing surface (37) of the honeycomb segment (8), the first and second fixtures (4,6) being secured to the honeycomb segment (8);
an intermediate member (43) arranged between the first surface section (12) and the first surface (36) of the honeycomb segment (8); and
another intermediate member (68) arranged between the second surface section (24) and the second, opposing surface (37) of the honeycomb segment (8);
wherein the intermediate members (43, 68) are selected to enhance the separation of the honeycomb segment (8) from the first fixture (4) and the second fixture (6) following the forming of the coating (65).

## Patentansprüche

1. Verfahren zur Herstellung eines vorbeschichteten Wabensegments (8) für Turbomaschinen, umfassend:
Bilden eines Wabensegments (8) mit einer ersten Oberfläche (36) und einer zweiten, gegenüberliegenden Oberfläche (37);
Bereitstellen eines Beschichtungsmaterials (60) auf dem Wabensegment (8), wobei sich das Beschichtungsmaterial (60) nicht bis zu der ersten Oberfläche (36) und zu der zweiten, gegenüberliegenden Oberfläche (37) erstreckt;
Positionieren der ersten Oberfläche (36) an einer ersten Halterung (4); und
Bilden einer Beschichtung (65) auf dem Wabensegment (8),
**dadurch gekennzeichnet, dass** das Verfahren ferner umfasst:
Bereitstellen eines ersten Zwischenelements (43) zwischen der ersten Oberfläche (36) und der ersten Halterung (4); und
Bereitstellen eines zweiten Zwischenelements (68) auf der zweiten, gegenüberliegenden Oberfläche (37) und einer zweiten Halterung (6) und Positionieren der zweiten Halterung (6) auf dem zweiten Zwischenelement (68); oder
Positionieren mindestens einer zweiten Halterung (6) auf der zweiten, gegenüberliegenden Oberfläche (37);
wobei das erste und das zweite Zwischenelement (43, 68) ausgewählt sind, um die Trennung des Wabensegments (8) von der ersten Halterung (4) und der zweiten Halterung (6) nach dem Bilden der Beschichtung (65) zu verbessern.

2. Verfahren nach Anspruch 1, wobei das Bereitstellen des Beschichtungsmaterials (60) auf dem Wabensegment (8) das Eintauchen des Wabensegments (8) in ein Gel (62) einschließt.

3. Verfahren nach Anspruch 2, ferner umfassend: Entfernen des Gels (62) von der ersten Oberfläche (36) und der zweiten, gegenüberliegenden Oberfläche (37) nachdem das Gel oder die Aufschlämmung (62) getrocknet ist.

4. Verfahren nach Anspruch 2, wobei das Eintauchen des Wabensegments (8) in das Gel (62) das Eintunken des Wabensegments (8) in eine Aufschlämmung (62) einschließt.

5. Verfahren nach Anspruch 1, wobei das Bereitstellen des Beschichtungsmaterials (60) auf dem Wabensegment (8) das Umhüllen des Wabensegments (8) in einem Zement (130) einschließt.

6. Verfahren nach Anspruch 5, wobei das Umhüllen des Wabensegments (8) in der Aufschlämmung (62) das Füllen von Hohlräumen (39) in dem Wabensegment (8) mit dem Zement (130) einschließt.

7. Verfahren nach Anspruch 5, wobei das Umhüllen des Wabensegments (8) mit dem Zement (130) das Umhüllen des Wabensegments (8) auf der ersten Halterung (4) mit einem Packungspulver einschließt.

8. Verfahren nach einem der Ansprüche 1 bis 4, wobei das Bereitstellen des Beschichtungsmaterials (60) auf dem Wabensegment (8) das Durchleiten eines chemischen Dampfes durch Öffnungen (27) in der ersten Halterung (4) einschließt.

9. Verfahren nach Anspruch 1, wobei das Bereitstellen des Zwischenelements (43) das Positionieren eines von einer expandierten Platte (46), einem Aluminiumband und einem Stop-off-Band (122) auf der ersten Halterung (4) einschließt.

10. Verfahren nach Anspruch 1, wobei das Positionieren der mindestens einen zweiten Halterung (6) auf der zweiten, gegenüberliegenden Oberfläche (37) das Positionieren einer Vielzahl von zweiten Halterungen (6) auf der zweiten, gegenüberliegenden Oberfläche (37) einschließt.

11. Verfahren nach Anspruch 1, wobei die mindestens eine zweite Halterung (6) eine Vielzahl von Öffnungen (27) einschließt.

12. Vorrichtung zum Vorbeschichten eines Wabensegments (8) für Turbomaschinen zur Verwendung in dem Verfahren nach einem der Ansprüche 1 bis 11, wobei die Vorrichtung umfasst:
eine erste Halterung (4) mit einem ersten Oberflächenbereich (12);
ein Wabensegment (8) mit einer ersten Oberfläche (36) und einer zweiten, gegenüberliegenden Oberfläche (37), wobei die erste Oberfläche (36) an dem ersten Oberflächenbereich (12) angeordnet ist;
eine zweite Halterung (6), die einen zweiten Oberflächenbereich (24) einschließt, der an der zweiten, gegenüberliegenden Oberfläche (37) des Wabensegments (8) angeordnet ist, wobei die erste und zweite Halterung (4, 6) an dem Wabensegment (8) befestigt sind;
ein Zwischenelement (43), das zwischen dem ersten Oberflächenbereich (12) und der ersten Oberfläche (36) des Wabensegments (8) angeordnet ist; und
ein weiteres Zwischenelement (68), das zwischen dem zweiten Oberflächenbereich (24) und der zweiten, gegenüberliegenden Oberfläche (37) des Wabensegments (8) angeordnet ist;
wobei die Zwischenelemente (43, 68) ausgewählt sind, um die Trennung des Wabensegments (8) von der ersten Halterung (4) und der zweiten Halterung (6) nach dem Bilden der Beschichtung (65) zu verbessern.

## Revendications

1. Procédé de fabrication d'un segment en nid d'abeille (8) pré-revêtu pour turbomachines comprenant :
la formation d'un segment en nid d'abeille (8) ayant une première surface (36) et une seconde surface opposée (37) ;
la fourniture d'un matériau de revêtement (60) sur le segment en nid d'abeille (8), le matériau de revêtement (60) ne s'étendant pas jusqu'à la première surface (36) et la seconde surface opposée (37) ;
le positionnement de la première surface (36) au niveau d'une première fixation (4) ; et
la formation d'un revêtement (65) sur le segment en nid d'abeille (8),
**caractérisé en ce que** le procédé comprenant en outre :
la fourniture d'un premier élément intermédiaire (43) entre la première surface (36) et la première fixation (4) ; et
la fourniture d'un second élément intermédiaire (68) sur la seconde surface opposée (37) et d'une seconde fixation (6) et le positionnement de la seconde fixation (6) sur le second élément intermédiaire (68) ; ou
le positionnement d'au moins une seconde fixation (6) sur la seconde surface opposée (37) ;
dans lequel les premier et second éléments intermédiaires (43, 68) sont sélectionnés pour améliorer la séparation du segment en nid d'abeille (8) par rapport à la première fixation (4) et la seconde fixation (6) à la suite de la formation du revêtement (65).

2. Procédé selon la revendication 1, dans lequel la fourniture du matériau de revêtement (60) sur le segment en nid d'abeille (8) inclut l'immersion du segment en nid d'abeille (8) dans un gel (62).

3. Procédé selon la revendication 2, comprenant en outre : le retrait du gel (62) de la première surface (36) et de la seconde surface opposée (37) après que le gel ou la bouillie (62) a séché.

4. Procédé selon la revendication 2, dans lequel l'immersion du segment en nid d'abeille (8) dans le gel (62) inclut le trempage du segment en nid d'abeille (8) dans une bouillie (62).

5. Procédé selon la revendication 1, dans lequel la fourniture du matériau de revêtement (60) sur le segment en nid d'abeille (8) inclut le recouvrement du segment en nid d'abeille (8) dans un ciment (130).

6. Procédé selon la revendication 5, dans lequel le recouvrement du segment en nid d'abeille (8) dans la bouillie (62) inclut le remplissage de vides (39) dans le segment en nid d'abeille (8) avec le ciment (130).

7. Procédé selon la revendication 5, dans lequel le recouvrement du segment en nid d'abeille (8) avec le ciment (130) inclut le recouvrement du segment en nid d'abeille (8) sur la première fixation (4) avec une poudre d'emballage.

8. Procédé selon l'une quelconque des revendications 1-4, dans lequel la fourniture du matériau de revêtement (60) sur le segment en nid d'abeille (8) inclut le passage d'une vapeur chimique à travers des ouvertures (27) dans la première fixation (4).

9. Procédé selon la revendication 1, dans lequel la fourniture de l'élément intermédiaire (43) inclut le positionnement de l'une d'une plaque expansée (46), d'une bande d'aluminium, et d'une bande d'arrêt (122) sur la première fixation (4).

10. Procédé selon la revendication 1, dans lequel le positionnement de l'au moins une seconde fixation (6) sur la seconde surface opposée (37) inclut le positionnement d'une pluralité de secondes fixations (6) sur la seconde surface opposée (37).

11. Procédé selon la revendication 1, dans lequel l'au moins une seconde fixation (6) inclut une pluralité d'ouvertures (27).

12. Appareil pour pré-revêtir un segment en nid d'abeille (8) pour turbomachines à utiliser dans le procédé selon l'une quelconque des revendications 1-11, l'appareil comprenant :
une première fixation (4) ayant une première section de surface (12) ;
un segment en nid d'abeille (8) ayant une première surface (36) et une seconde surface opposée (37), la première surface (36) étant disposée au niveau de la première section de surface (12) ;
une seconde fixation (6) incluant une seconde section de surface (24) disposée au niveau de la seconde surface opposée (37) du segment en nid d'abeille (8), les première et seconde fixations (4, 6) étant fixées au segment en nid d'abeille (8) ;
un élément intermédiaire (43) disposé entre la première section de surface (12) et la première surface (36) du segment en nid d'abeille (8) ; et
un autre élément intermédiaire (68) agencé entre la seconde section de surface (24) et la seconde surface opposée (37) du segment en nid d'abeille (8) ;
dans lequel les éléments intermédiaires (43, 68) sont sélectionnés pour améliorer la séparation du segment en nid d'abeille (8) par rapport à la première fixation (4) et la seconde fixation (6) à la suite de la formation du revêtement (65).
